# EUROPEAN PATENT APPLICATION

(11) **EP 2 388 494 A1**
(43) Date of publication of application: **23.11.2011**
(21) Application number: 10163623.1
(22) Date of filing: 21.05.2010
(51) Int. Cl.: F16F 13/00

(54) **Vibration damper**

(71) Applicant: M. Wilmsen Beheer B.V., 3251 XP Stellendam (NL)
(72) Inventor: Wilmsen, Marco, 3251 XP Stellendam (NL)
(74) Representative: Ketelaars, Maarten F.J.M.

(57) **Abstract**

The invention relates to a vibration damper (1) having a housing formed by a shell part (2) and a base part (3) and having therein a pressure cavity (4) which at least partially is delimited by a dome shaped membrane (5) of an elastomer material arranged in the housing. The vibration damper further comprises a fixing arrangement (6) for transmitting vibrations to be damped to the membrane (5), one end (7) of the fixing arrangement (6) protruding out of the housing via an opening (8) in the shell part (2) and the other end (9) of the fixing arrangement (6) being fixed to the membrane (5). The dome shaped membrane (5) comprises an annular rim which is clasped between the shell part (2) and the base part (3) and forms a seal between the membrane (5) and base part (3) to obtain the pressure cavity (4).

## Description

### TECHNICAL FIELD OF THE INVENTION

The present invention relates to a vibration damper defined by the preamble of claim 1.

### BACKGROUND OF THE INVENTION

A vibration damper of this type is known from EP0839292. The vibration damper comprises a membrane 4 made of rubber and bonded to a shell part by means of vulcanising. The rubber is vulcanised to the desired locations on the shell part on the inside of the shell part. Furthermore, a bag is arranged in the pressure cavity and is filled with compressed air and is connected to a duct 14 through a fixing pin. The bag is airtight and has the advantage that the shell part and base part does not have to be fixed in an airtight manner.

DE1114062 discloses a vibration damper with a membrane in a shell part. The vibration damper does not comprise a pressure cavity to adjust the vibration damping characteristics of the vibration damper.

### SUMMARY OF THE INVENTION

The object of the invention is to provide an improved vibration damper with pressure cavity, which has equivalent or improved vibration-damping characteristics, can be manufactured with less difficulty and less costs than the known vibration damper and is preferably very suitable for use in the suspension of engines, in particular ship's engines.

According to the invention, this object is achieved by a vibration damper having the features of Claim 1. Advantageous embodiments and further ways of carrying out the invention may be attained by the measure mentioned in the dependent claims.

According to the invention, a vibration damper comprises a housing formed by a shell part and a base part and have therein a pressure cavity. The cavity is at least partially delimited by a dome shaped membrane of an elastomer material which is arranged in the housing. The vibration damper further comprises a fixing arrangement for transmitting vibrations to be damped to the membrane. One end of the fixing arrangement protrudes out of the housing via a first opening in the shell part. The other end of the fixing arrangement is fixed to the membrane. The dome shaped membrane comprises an annular rim which is clasped between the shell part and the base part forming a seal between the membrane and base part so as to obtain the pressure cavity.

An advantage of these features is that no internal bag is needed to provided the pressure cavity. Furthermore, there is no need to bond the membrane to the shell part by means of vulcanizing, which allows us to use other materials than metal for both the shell part and the base part, for example a plastic, such as a thermosoftening plastic, thermosetting plastic and HDPE.

In an embodiment of the invention the base part is press or snap fit affixed in the shell part. These features provides an simple method to assemble to vibration damper.

In an embodiment of the invention, the shell part and the base part form together the underside of the vibration damper, wherein the shell part encompass the base part. In use, when the vibration damper is secured on a flat structure, the base part cannot be pressed out of the shell part.

In an embodiment of the invention, the shell part comprises dome shaped part forming a cavity for the membrane and at least a part of the bottom part. The shell part further comprises at least two fastening plates linked to the dome shaped part, wherein the at least two fastening plates form the underside of the vibration damper. The vibration damper further comprises ribs wherein a first side of a rib is coupled to a fastening plate and a second side of said rib is coupled to the dome shaped part. In a particular embodiment, the ribs are positioned along outer edges of the fastening plates. By means of these features, the shell part forms a rigid structure which resists the vibrations.

In an embodiment of the invention, the membrane comprises a filling part wherein a valve for changing the pressure in the pressure cavity is positioned. The shell part further comprises a second opening for passing the filling part through the shell part. These features allow us to change the pressure in the pressure cavity when a load is positioned on the vibration damper to change the height of the load with respect to the floor and/or the damping characteristics of the vibration damper.

In an embodiment, the shell part comprises a central axis, and radians from the central axis through the second opening do not coincide with the mounting holes. The bolts or threaded parts through a mounting hole will no block the access to the valve.

In an embodiment, the vibration damper further comprises a closing member attached or close to the one end of the fixing arrangement and extending up to the dome shaped part of the shell part for closing the first opening 8 in the shell part.

In an embodiment, the shell part and/or the base part is an injection molded part. Injection moulding allows us to manufacture the shell part and/or base part with a structure that could not easily be made with metalworking.

In an embodiment of the invention, the cavity in the shell part, the dome shaped membrane, base part and/or closing member have a circular symmetric shape.

The present invention also relates to the use of a vibration damper according to the invention the suspension and/or support of an internal combustion engine, in particular a ship's engine in a ship, or generators in buildings or wind turbines.

It will be clear that the various aspects mentioned in this patent application may be combined and may each be considered separately for a divisional patent application. Other features and advantages of the invention will become apparent from the following detailed description, taken in conjunction with the accompanying drawing which illustrate, by way of example, various features of preferred embodiments of the invention.

### BRIEF DESCRIPTION OF THE FIGURES

These and other aspects, properties and advantages of the invention will be explained hereinafter based on the following description with reference to the drawings, wherein like reference numerals denote like or comparable parts, and in which:
FIG. 1 shows a cross section along I - I in FIG. 2 of an embodiment of a vibration damper according to the invention;
FIG. 2 shows a top view of the embodiment shown in FIG. 1;
FIG. 3 shows a side view of the embodiment shown in FIG. 1; and,
FIG. 4 shows a bottom view of the embodiment shown in FIG. 1.

### DESCRIPTION OF EMBODIMENTS

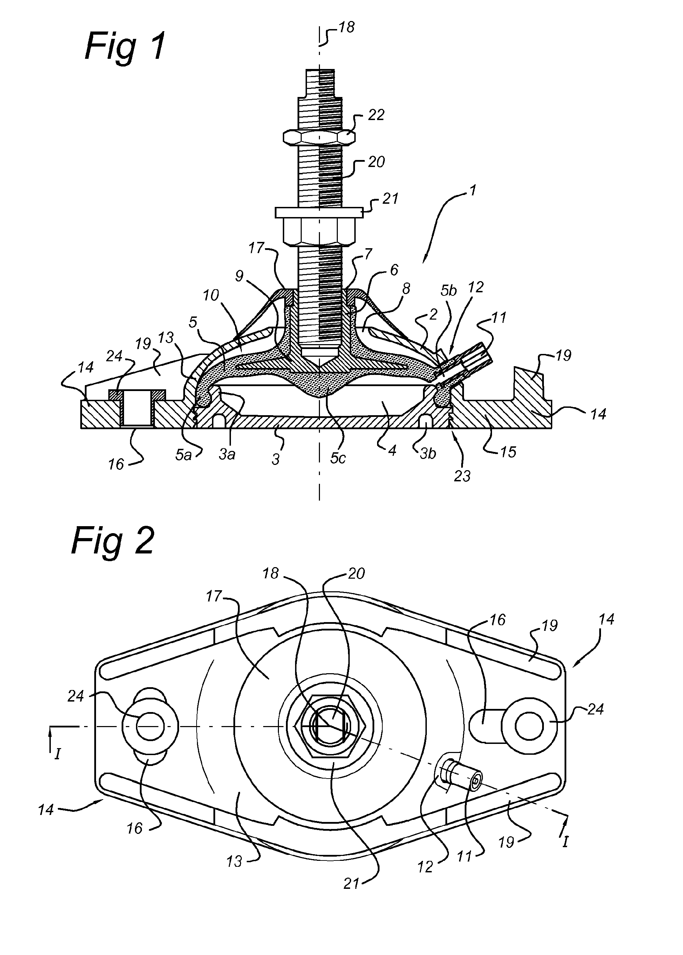

FIG. 1 shows a cross section along I - I in FIG. 2 which shows a top view of an embodiment of a vibration damper 1 according to the invention. The vibration damper comprises a housing formed by a shell part 2 and a base part 3. The shell part 2 and base part 3 are preferably made of a plastic, such as a thermosoftening plastic, thermosetting plastic and HDPE. The shell part 2 and base part could be made by means of an injection molding process. However, they could also be made of metal, such a stainless steel. The shell part 2 comprises a flat underside 15 and a dome shaped section 13. A dome shaped membrane 5 is provided in a cavity of the housing formed by the dome shaped section 13 and base part 3. The membrane 5 is made of an elastomer material, preferably of rubber, such as, for example, natural rubber. The dome shaped membrane 5 and base part 3 delimit a pressure cavity 4. A fixing arrangement 6 configured for transmitting vibrations to be damped by the vibration damper to the membrane 5 is at least partially incorporated in the membrane 5. One end 7 of the fixing arrangement 6 protrudes out of the housing via an opening 8 in the shell part 2. In this way, the fixing arrangement 6 can move along central axis 18 in the opening 8. Another end 9 of the fixing arrangement 6 opposite to the one end 7 is fixed to the membrane 5 The fixing arrangement 6 comprises a central bore for receiving a stud 20. The bore comprises a thread for screwing the stud 20 in the fixing arrangement 6 to couple a stud to the fixing arrangement 6. In FIG. 1 a first 21 and second nut 22 are screwed on the stud 20. The first nut 21 can be used to set the height of an engine that is positioned on the vibration damper 1. The second nut 22 is used to secure the engine to the vibration damper by clamping a fixing structure of the engine between the first and second nut.

The other end 9 of the fixing arrangement 6 comprises an essentially circularly symmetrical plate part which ensures that the forces exerted on the membrane 4 via the stud are distributed over the membrane 4, so that the fixing arrangement 6 does not break out of the membrane 4. The circularly symmetrical plate is incorporated in the membrane 5.

The vibration damper 1 comprises a central axis 18 which essentially coincides with the symmetry axis of the dome shaped section 13 of the shell part 2, the membrane 5, fixing arrangement 6 and base part 3. The fixing arrangement 6 can move essentially along said central axis with respect to the shell part 2 and base part 3.

The dome shaped membrane 5 comprises an annular rim 5a. The rim 5a is clasped between the shell part 2 and the base part 3. In this way a seal is formed between the membrane 5 and base part 3 and a pressure cavity 4 is provided. The base part 3 comprises an annular flange 3a which forms with the base part of the dome shaped section 13 of the shell part 2 a groove configured for clasping the annular rim 5a. In the embodiment given, the base part 3 is fastened in the shell part 2 by means of a snap-fitting 23. An annular groove 3b is provided in de underside of the base part 3, this provides to the base part 3 some flexibility to be pressed and to snap in the shell part 2. However other constructions for securing the base part 3 with respect to the shell part 2 are possible. For example, the base part could be screwed in to shell part by means of cooperating threads.

A side of the membrane 5 which faces the base part 3 is provided with a shock buffer 5c. Said shock buffer 5c ensures that in the case of high inwardly directed forces on the fixing arrangement 6 the force with which the membrane 5, or, if preferred, the fixing arrangement 6 impacts on the base part 3 is damped.

The vibration damper 1 comprises a filling part 12 for passing a compressible fluid in to the pressure cavity 4.. The filling part 12 comprises a through hole 5b and an air valve 11 positioned in line with the through hole 5b. The through hole 5b is provided in the membrane 5 between the annular rim 5 a and the fixing arrangement 6. The air valve 11 for changing the pressure in the pressure cavity 4 is fastened to the membrane 5. By this means it is possible to adjust the pressure in the pressure cavity 4 depending on the load conditions and thus to influence the vibration/damping characteristics. Furthermore, it allows one to set the fixing arrangement 6 at a predefined installation distance from the base part 3 irrespective of the load acting on the fixing arrangement 6. The shell part 2 comprises a second opening 12 for passing the filling part 12 through the shell part 2 and making the air valve 11 accessible for a user.

Furthermore, in FIG 1, the base part 3 is fully received in the cavity formed by the shell part 2. The underside of the base part 3 is in the same plane as the underside of the shell part wherein the underside of the shell part 2 encompass the underside of the base part 3. This ensures that the base part 3 cannot be pressed out of the shell part 2 when the shell part 2 is affixed to a flat structure and forces are acting on the membrane 5. After positioning the base part 3 in the cavity of the shell part 2, the surfaces of the annular flange 3a and annular rim 5a will continuously be pressed to each other providing the seal. In another embodiment, not shown, the base part 3 covers essentially the whole underside of the shell part 3. In this embodiment, by affixing the shell part 2 to a structure, the base part 3 will be clamped between the shell part 2 and the structure.

The shell part 2 further comprises two fastening plates 14. The fastening plates extends from the underside of the dome shaped section 13 of the shell part 2. The fastening plates 14 have an underside which is perpendicular to the central axis 18. The two fastening plates 14 form the underside 15 of the vibration damper 1. FIG. 2 shows that dome shaped section 9 of the shell part 2 is positioned between the fastening plates 14. Each fastening plate 14 comprises a mounting hole 16, for passing fastening means such as a screw, a bolt or a stud. The mounting holes 16 have an oval shape allowing one to align damper 1 on the structure. The length axis of the two mounting holes 14 are perpendicular with respect to each other. Bushings 24 are positioned in the mounting holes 13 to reduce the friction exerted on the material of the fastening plates 14 when affixing the vibration damper to a structure by screwing means such as a bold and a nut (not shown).

The vibration damper further comprises ribs 19 configured for strengthening the shell part 2. A first side of each rib 19 is coupled to a fastening plate 14 and a second side of said rib is coupled to the dome shaped part 13. Furthermore, the ribs are positioned along the outer edges of a fastening plate 14. In this way, a fastening plate 14 is coupled to the dome shaped section 9 at the underside of the shell part 2 and by means of two ribs 19 extending between the dome of the dome shaped part and the surface opposite to the underside. From FIG. 2 can further be seen that radians from the central axis 18 passing the through holes 16 do not coincide with radians passing the second opening 12 in the dome shaped section. In this way, a fastening means to fasten the vibration damper 1 to a structure will not obstruct the access to the air valve 11.

The vibration damper 1 further comprises a closing member 17 attached to the one end of the fixing arrangement 6 and extending up to the shell part 2. The closing member 17 is cone shaped and made of an elastomer and is configured for closing the opening 8 in the shell part 2. In this way is prevented that dirt will enter the housing which could result in deterioration of the damping characteristics of the vibration damper. The closing member 17 could also be configured such that it could be slit along a stud positioned in the fixing arrangement 6. The closing member 17 is a dome shaped collar which inner annular edge adjoins the stud 20 and which outer annular edge adjoins the dome shaped shell part 13.

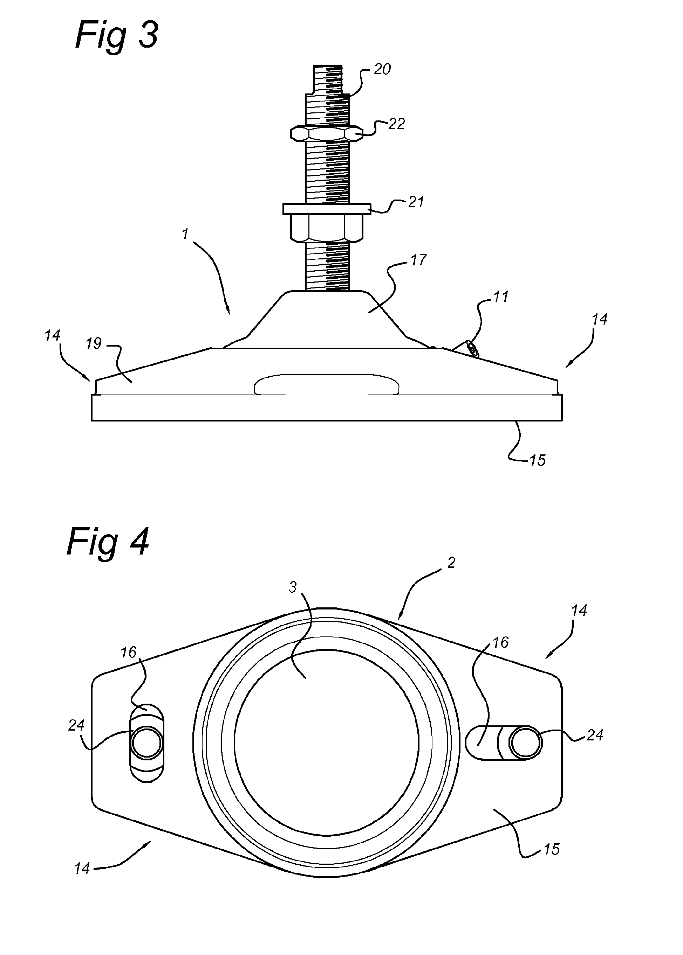

FIGS. 2 and 3 show further that the ribs 19 to strengthen the shell part 2 extend from one fastening plate 14 to the opposite fastening plate 14 along the dome shaped part 13.

The measures described hereinbefore for embodying the invention can obviously be carried out separately or in parallel or in a different combination or if appropriate be supplemented with further measures; it will in this case be desirable for the implementation to depend on the field of application of the vibration damper. The invention is not limited to the illustrated embodiments. Changes can be made without departing from the idea of the invention. For example, the base part 3 in the embodiment shown in FIG. 1 could be extended with fastening plates that coincides with the fastening plates 14 of the shell part2.

## Claims

1. Vibration damper (1) comprising a housing formed by a shell part (2) and a base part (3) and having therein a pressure cavity (4) which at least partially is delimited by a dome shaped membrane (5) of an elastomer material arranged in the housing, the vibration damper further comprising a fixing arrangement (6) for transmitting vibrations to be damped to the membrane (5), one end (7) of the fixing arrangement (6) protruding out of the housing via an opening (8) in the shell part (2) and the other end (9) of the fixing arrangement (6) being fixed to the membrane (5), **characterized in that**, the dome shaped membrane (5) comprises an annular rim which is clasped between the shell part (2) and the base part (3) forming a seal between the membrane (5) and base part (3) to obtain the pressure cavity (4).

2. Vibration damper (1) according to claim 1, **characterized in that**, the shell part (2) and base part (3) are made of plastic.

3. Vibration damper (1) according to any of the preceding claims, **characterized in that**, the base part (3) is press fit affixed in the shell part (2).

4. Vibration damper (1) according to any of the preceding claims, **characterized in that**, the shell part (2) and the base part form together the underside of the vibration damper, wherein the shell part (2) encompass the base part (3).

5. Vibration damper (1) according to any of the preceding claims, **characterized in that**, the shell part (2) comprises dome shaped part (13) forming a cavity for the membrane (5) and the bottom part (3), wherein the shell part (2) further comprises at least two fastening plates (14) linked to the dome shaped part (13), wherein the at least two fastening plates (14) form the underside (15) of the vibration damper.

6. Vibration damper (1) according to claim 5, **characterized in that**, the vibration damper further comprises ribs wherein a first side of a rib is coupled to a fastening plate (14) and a second side of said rib is coupled to the dome shaped part (13).

7. Vibration damper (1) according to claim 6, **characterized in that**, the ribs are positioned at the outer edges of the at least two fastening plates (14).

8. Vibration damper (1) according to any of the preceding claims, **characterized in that**, the membrane (5) comprises a filling part (12) wherein a valve (11) for changing the pressure in the pressure cavity (4), is positioned.

9. Vibration damper (1) according to claim 8, **characterized in that**, the shell part (2) comprises a second opening (12) for passing the filling part (12) through the shell part (2).

10. Vibration damper (1) according to claim 9, **characterized in that**, the shell part further comprises at least two fastening plates (14) provided with mounting holes (16), wherein the shell part (2) comprises a central axis, and radians from the central axis through the second opening do not coincide with the mounting holes (16).

11. Vibration damper (1) according to any of the preceding claims, **characterized in that**, the damper (1) further comprises a closing member (17) attached to the one end of the fixing arrangement and extending up to the shell part (2) for closing the opening (8) in the shell part (2).

12. Vibration damper (1) according to any of the preceding claims, **characterized in that**, the shell part (2) is an injection moulded part.

13. Vibration damper (1) according to any of the preceding claims, **characterized in that**, the base part (3) is an injection moulded part.

14. Vibration damper (1) according to any of the preceding claims, **characterized in that**, the cavity in the shell part (2), the dome shaped membrane (4) and base part (3) have a circular symmetric shape.

15. Use of a vibration damper according to any of the preceding claims for the suspension and/or support of an engine.
